# EUROPÄISCHE PATENTSCHRIFT

(11) **EP 4 565 852 B1**
(45) Veröffentlichungstag und Bekanntmachung des Hinweises auf die Patenterteilung: **29.10.2025**
(21) Anmeldenummer: 23750553.2
(22) Anmeldetag: 21.07.2023
(51) Int. Cl.: G01G 21/23, G01C 19/22

(54) **MONOLITHISCHE BIEGEGELENKANORDNUNG UND UNTERSCHALIGE WAAGE**
MONOLITHIC BENDING JOINT ARRANGEMENT AND SCALE
ENSEMBLE D'ARTICULATION DE FLEXION MONOLITHIQUE ET BALANCE

(30) Priorität: 02.08.2022 DE 102022119372
(43) Veröffentlichungstag der Anmeldung: 11.06.2025
(73) Patentinhaber: Sartorius Lab Instruments GmbH & Co. KG, 37079 Göttingen (DE)
(72) Erfinder: HILBRUNNER, Falko, 98693 Ilmenau (DE); FRÖHLICH, Thomas, 98693 Ilmenau (DE); SCHREIBER, Mario, 07607 Gösen (DE); SCHULZ, Tim, 98617 Untermaßfeld (DE); FEHLING, Thomas, 37218 Witzenhausen (DE)
(74) Vertreter: Novagraaf International SA
(86) Internationale Anmeldenummer: PCT/EP2023/070286
(87) Internationale Veröffentlichungsnummer: WO 2024/028123

(56) Entgegenhaltungen:
- EP-A1- 0 167 133
- EP-A1- 3 690 264
- DE-A1- 2 114 802

## Beschreibung

### Gebiet der Erfindung

Die Erfindung bezieht sich auf eine monolithische Biegegelenkanordnung, umfassend einen Hauptkörper, der von zwei Kanalpaaren, nämlich einem ersten Kanalpaar und einem zweiten Kanalpaar, durchsetzt ist, welche senkrecht zueinander ausgerichtet in einer Radialebene verlaufen und im Zentrum des Hauptkörpers einander sowie eine normal zur Radialebene stehende Zentralachse schneiden,
wobei jedes Kanalpaar zwei einzelne, parallel zueinander ausgerichtete Durchgangskanäle aufweist, welche mit einander zugewandten, konvex gewölbten Kanalwandabschnitten einander derart eng benachbart angeordnet sind, dass zwischen besagten gewölbten Kanalwandabschnitten verlaufende Stege gemeinsam ein Biegegelenk bilden,
wobei ein Zentralstück des Hauptkörpers mittels eines zwischen den Durchgangskanälen des ersten Kanalpaares gebildeten, ersten Biegegelenks schwenkbeweglich an ein im Übrigen mit ihm unverbundenes Eingangsstück angelenkt ist und mittels eines zwischen den Durchgangskanälen des zweiten Kanalpaares gebildeten, zweiten Biegegelenks schwenkbeweglich an ein im Übrigen mit ihm unverbundenes Ausgangsstück angelenkt ist.

Die Erfindung bezieht sich weiter auf eine unterschalige Waage, deren Wägegutträger über eine derartige Biegegelenkanordnung mit dem Lastaufnehmer ihres Wägesystems gekoppelt ist.

### Stand der Technik

Eine gattungsgemäße Biegegelenkanordnung ist bekannt aus der DE 21 14 802 A.

Präzisionswaagen, die insbesondere als sogenannte Komparatoren, die zur Kalibrierung bzw. Eichung von Testgewichten gegenüber Prüfgewichten verwendet werden, sind vielfach als unterschalige Waagen ausgebildet. Bei einer unterschaligen Waage ist der zur Aufnahme des Wägegutes bestimmte Wägegutträger unterhalb des sogenannten Lastaufnehmers angeordnet und über ein Koppelgelenk mit diesem gekoppelt. Der Lastaufnehmer seinerseits ist Bestandteil eines sogenannten Wägesystems, d.h. einer mehr oder weniger komplexen Konstruktion aus Hebeln und Lenkern, die eine auf den Lastaufnehmer wirkende Gewichtskraft mit geeigneter Wäge- bzw. Kraftübersetzung auf den eigentlichen Sensor überträgt. Letzterer kann beispielsweise bei nach dem Prinzip der elektromagnetischen Kompensation arbeitenden Waagen (EMK-Waagen) als Tauchspulenanordnung ausgebildet sein, wobei der zur Aufrechterhaltung des Gleichgewichtszustandes erforderliche Spulenstrom als Messgröße dient, die repräsentativ für die auf den Lastaufnehmer wirkende Gewichtskraft ist. Die spezielle Funktionsweise des Sensors spielt für die vorliegende Erfindung jedoch keine Rolle. Gewünscht ist aber in jedem Fall, dass die von der zu verwiegenden Masse auf den Wägegutträger ausgeübte Gewichtskraft exakt vertikal in den Lastaufnehmer des Wägesystems eingeleitet wird. Hierzu ist eine gelenkige Kopplung zwischen Lastaufnehmer und Wägegutträger erforderlich, die Schwenkbewegungen um zwei senkrecht zueinander stehende, horizontal verlaufende Schwenkachsen ermöglicht, wobei besagte Schwenkachsen vorzugsweise in derselben Horizontalebene verlaufen sollten.

Aus der eingangs genannten, gattungsbildenden Druckschrift ist eine hierfür grundsätzlich taugliche, monolithische Biegegelenkanordnung bekannt, wobei die in der Druckschrift genannte, bevorzugte Anwendung in der Kopplung einer Antriebswelle mit einem Schwungrad besteht. Der Hauptkörper der bekannten Biegegelenkanordnung weist die hohlzylindrische Grundform eines Rohrabschnitts auf. Dieser ist in drei axiale Abschnitte unterteilt, deren mittlerer als Zentralstück und deren axial äußere als Ein- bzw. Ausgangsstück bezeichnet werden können, wobei diese Bezeichnung allein der strukturellen Differenzierung der Elemente ohne funktionale Implikation dient. Ein- und Ausgangsstück sind jeweils über ein Biegegelenk schwenkbar an das Zentralstück angelenkt, wobei die beiden Schwenkachsen in derselben Radialebene des Hauptkörpers, nämlich insbesondere in seiner Mittenebene, liegen und senkrecht zueinander verlaufen. Jedes der beiden Biegegelenke setzt sich aus zwei Materialdünnstellen zusammen, die einander paarweise in der Rohrwand des hohlzylindrischen Hauptkörpers radial gegenüberliegen. Jede Materialdünnstelle ist durch den Steg zwischen zwei eng benachbart zueinander liegende Bohrungen durch die Rohrwand gebildet. Die beiden jeweils auf einer Parallelen zur Radialen liegenden Einzelbohrungen können gemeinsam als ein vom Lumen des Rohrabschnitts unterbrochener Durchgangskanal durch den hohlzylindrischen Hauptkörper angesehen werden. Jedes Biegegelenk wird also durch ein Kanalpaar aus zwei einander eng benachbarten Durchgangskanälen durch den Hauptkörper gebildet. Jede Durchgangsbohrung ist über einen den Hauptkörper halb umlaufenden Durchgangsschlitz mit ihrem auf derselben Radialparallelen liegenden Partner verbunden, wodurch eine mit Ausnahme der Biegegelenksverbindungen vollständige Trennung des Zentralstücks einerseits von Ein- und Ausgangsstück andererseits realisiert ist.

In zwei Aspekten ist die bekannte Biegegelenkanordnung nachteilig in Bezug auf ihren Einsatz als gelenkige Kopplung zwischen dem Wägegutträger und dem Lastaufnehmer einer unterschaligen Waage. Zum einen ist es schwer, die im Wesentlichen ringförmigen Ein- und Ausgangsstücke gerade am Lastaufnehmer bzw. Wägegutträger zu fixieren. Dies insbesondere in Anbetracht des Umstandes, dass bei Präzisionsinstrumenten optimalerweise eine Justierbarkeit der Kopplung, und zwar sowohl in vertikaler als auch in azimutaler Richtung, gegeben sein sollte. Zum anderen muss als nachteilig angesehen werden, dass jedes der beiden Biegegelenke nur aus zwei quasi punktförmigen Materialdünnstellen besteht. Solche Gelenke sind nicht vollkommen steif gegenüber parasitären Bewegungskomponenten und insbesondere anfällig für Torsionsbewegungen. Entsprechend sieht die genannte Druckschrift auch vor, die erläuterte Biegegelenkanordnung nicht allein, sondern nur in Kombination mit einer ähnlich konstruierten Biegegelenkanordnung zu verwenden, wobei beide Anordnungen konzentrisch ineinander eingesetzt werden. Dies bedeutet zusätzlichen Montageaufwand sowie einen Präzisionsverlust, der im Kontext einer Antriebswelle wohl noch vertretbar ist, bei der hier im Fokus stehenden Anlenkung des Wägegutträgers an den Lastaufnehmer einer Präzisionswaage allerdings nicht hinnehmbar ist.

### Aufgabenstellung

Es ist die Aufgabe der vorliegenden Erfindung, eine gattungsgemäße Biegegelenkanordnung derart weiterzubilden, dass sie zur Kopplung des Wägegutträgers an den Lastaufnehmer einer unterschaligen Präzisionswaage besser geeignet ist.

### Darlegung der Erfindung

Diese Aufgabe wird in Verbindung mit den Merkmalen des Oberbegriffs von Anspruch 1 dadurch gelöst, dass das Eingangsstück und/oder das Ausgangsstück als ein das Zentralstück radial durchsetzender Balken ausgebildet ist.

Eine unterschalige Waage mit entsprechender Kopplung ihres Wägegutträgers mit ihrem Lastaufnehmer ist Gegenstand von Anspruch 8.

Bevorzugte Ausführungsformen der Erfindung sind Gegenstand der abhängigen Patentansprüche.

Die Erfindung nimmt Abstand von der aus dem Stand der Technik bekannten, im Wesentlichen hohlzylindrischen Grundform des Hauptkörpers der Biegegelenkanordnung und sieht eine im Wesentlichen vollzylindrische Hauptkörper-Grundform vor. Das das jeweilige Biegegelenk bildende Kanalpaar ist nicht länger auf korrespondierende Durchbrüche durch eine dünne Rohrwandung beschränkt, sondern besteht aus echten Kanälen, die über ihre gesamte Länge oder wenigstens einen wesentlichen Teil davon von Kanalwandungen umgeben sind. Dadurch verlängert sich auch der zwischen den Einzelkanälen des Kanalpaars bestehende, die Schwenkachse des jeweiligen Biegegelenks definierende Steg und erstreckt sich im Wesentlichen radial durch den gesamten Hauptkörper. Lediglich im Zentralbereich, d.h. im Kreuzungsbereich der beiden Kanalpaare, stellt sich durch die Kreuzung der Kanal-Lumen automatisch ein vergleichsweise kleiner, die Kanäle unterbrechender Hohlraum ein. Bei der bevorzugten Ausführungsform, bei der Ein- und Ausgangselement als radiale Balken ausgebildet sind, setzt sich also jedes Biegegelenk aus zwei sich jeweils nahezu über die Hälfte des Hauptkörperdurchmessers erstreckenden Stegen zusammen, was zu einer deutlich präziseren Definition der Schwenkachsen führt, als dies bei deren Definition durch lediglich zwei quasi-punktförmige Materialdünnstellen im Stand der Technik der Fall war.

Ein weiterer Vorteil der erfindungsgemäßen Ausgestaltung liegt darin, dass die Zentralpunkte der Stirnflächen von Ein- bzw. Ausgangsstück nicht im hohlen Lumen des rohrförmigen Hauptkörpers liegen, sondern im Material des Ein- bzw. Ausgangsstücks. Dies erlaubt es, Koppelelemente zum Lastaufnehmer bzw. Wägegutträger an zentraler Stelle unmittelbar am Ein- bzw. Ausgangsstück anzubringen. Bevorzugte Ausführungsformen solcher Koppelelemente sollen weiter unten noch näher beschrieben werden.

Ein dritter Vorteil der erfindungsgemäßen Ausgestaltung liegt schließlich darin, dass das Ein- bzw. Ausgangsstück mit dem Zentralstück verschachtelt ausgebildet werden kann. Wenn Ein- und/oder Ausgangsstück als ein das Zentralstück radial durchsetzender Balken ausgebildet ist, kann das Zentralstück selbst den verbleibenden Raum seitlich dieses Balkens auf gleicher axialer Höhe ausfüllen. Beim Stand der Technik war dies nicht der Fall; hier mussten Ein- bzw. Ausgangsstück einerseits und Zentralstück andererseits rein axial benachbart zueinander angeordnet werden. Die erfindungsgemäße Ausgestaltung erlaubt also eine deutliche axiale Bauraumeinsparung.

Bei der bevorzugten Ausführungsform sind, wie erwähnt, nicht nur das Ein- oder das Ausgangsstück, sondern sowohl das Ein- als auch das Ausgangsstück jeweils als ein das Zentralstück radial durchsetzender Balken ausgebildet, wobei die Balken windschief und senkrecht zueinander sowie senkrecht zur Zentralachse ausgerichtet sind. Hierdurch verbleiben Ein- und Ausgangsstück in unterschiedlichen axialen Abschnitten des Hauptkörpers; ihre zugeordneten Schwenkachsen können jedoch in derselben Radialebene liegen. Dies ist, wie eingangs erläutert, für Anwendungen in der Präzisionswägetechnik vorteilhaft.

Bevorzugt weist das Eingangsstück auf seiner dem zugeordneten Biegegelenk abgewandten Seite eine zur Zentralachse koaxiale Fixierungsöffnung zur Aufnahme eines Koppelstiftes auf. Wie weiter oben erläutert, existiert im Zentralbereich der Biegegelenkanordnung "Fleisch" des Eingangsstücks. Hier kann eine Öffnung eingebracht werden, die als Schnittstelle für einen Koppelstift dient, mit welchem das Eingangsstück am Lastaufnehmer (bevorzugt) oder am Wägegutträger einer unterschaligen Waage fixiert werden kann.

Die Fixierungsöffnung kann mit einem Innengewinde versehen sein, in welches ein korrespondierendes Außengewinde des Koppelstiftes einschraubbar sein kann. Als günstiger wird es jedoch angesehen, wenn das Eingangsstück einen quer zur Fixierungsöffnung verlaufenden Gewindekanal zur Aufnahme einer den Koppelstift in der Fixierungsöffnung klemmenden Klemmschraube aufweist. Auf diese Weise lässt sich nämlich eine Axial- oder Höhenjustierung realisieren. Der Koppelstift sollte dabei möglichst formschlüssig und axialbeweglich in die Fixierungsöffnung einsteckbar sein - wie z.B. ein zylindrischer Koppelstift in einer runden Fixierungsbohrung. Die gewünschte Relativpositionierung von Koppelstift und Eingangsstück in axialer sowie in azimutaler Richtung kann dann durch die Klemmschraube im quer zur Fixierungsöffnung verlaufenden Gewindekanal stabilisiert werden. Bevorzugt verläuft der Gewindekanal parallel zur Längserstreckung des Balkens des Eingangsstücks. Besonders bevorzugt erstreckt er sich über die gesamte Länge des Balkens des Eingangsstücks, sodass der in die Fixierungsöffnung eingesteckte Koppelstift von zwei Seiten her mit Klemmschrauben fixiert werden kann.

Für das Ausgangsstück ist hingegen bevorzugt vorgesehen, dass es auf seiner dem zugeordneten Biegegelenk abgewandten Seite einen koaxial zur Zentralachse längserstreckte Koppelbolzen aufweist. Der Koppelbolzen kann sich beispielsweise materialeinheitlich einstückig aus der Stirnseite des Ausgangsstücks erheben. Er kann als Schnittstelle zur Kopplung des Ausgangsstücks mit dem Lastaufnehmer oder (bevorzugt) dem Wägegutträger einer unterschaligen Präzisionswaage genutzt werden. Bevorzugt weist der Koppelbolzen eine zylindrische Grundform mit einer seitlichen Klemmabflachung auf. Handelt es sich bei der korrespondierenden Schnittstelle des Lastaufnehmers oder Wägegutträgers um eine Hülse mit einem seitlichen Gewindekanal, kann die Klemmabflachung des Koppelbolzens als Widerlager für eine im Gewindekanal geführte Klemmschraube dienen.

Bei der bevorzugten Ausführungsform der Erfindung ist vorgesehen, dass zur Ausbildung eines gemeinsamen Fixierungskanals die Fixierungsöffnung des Eingangsstücks in eine das Ausgangsstück vollständig und bevorzugt auch den Koppelbolzen wenigstens über die Länge eines Teilbereichs durchsetzende Fixierungsöffnung des Ausgangsstücks übergeht. Mit anderen Worten ist also bei der bevorzugten Ausführungsform ein die weitgehend gesamte Biegegelenkanordnung koaxial durchsetzender Kanal vorgesehen. Lediglich die Spitze des Koppelbolzens ist bei dieser Ausgestaltung geschlossen. Der Fachmann wird verstehen, dass ein Fixierungsstift, der formschlüssig entlang der Länge eines solchen gemeinsamen Fixierungskanals in die erfindungsgemäße Biegegelenkanordnung eingeschoben wird, beide Biegegelenke gleichzeitig blockiert. Jegliche Relativauslenkung von Ein- und Ausgangsstück zum Zentralstück wird auf diese Weise unterbunden. Eine solche Gelenkblockade kann insbesondere in Transportsituationen sinnvoll sein, wenn die Gefahr besteht, dass durch äußere Kräfte übermäßige Auslenkbewegungen auf die filigranen Biegegelenke ausgeübt werden könnten. Beim bestimmungsgemäßen Betrieb der erfindungsgemäßen Biegegelenkanordnung muss ein solcher Fixierungsstift freilich wenigstens so weit entfernt werden, dass er die Radialebene der beiden Biegegelenke nicht länger kreuzt. Nur dann nämlich kann die erfindungsgemäße Biegegelenkanordnung die beiden bestimmungsgemäßen Schwenkbewegungen vollführen. Bei der bevorzugten Ausführungsform kann, wie nachfolgend erläutert, der Koppelstift die zusätzliche Funktion eines temporären Fixierungsstiftes erfüllen.

Mit einer erfindugnsgemäßen Biegegelenkanordnung mit gemeinsamem Fixierungskanal lässt sich eine erfindungsgemäße Waage aufbauen. Es ist dies insbesondere eine unterschalige Waage, umfassend
- einen über ein Wägesystem mit einem Wägesensor gekoppelten Lastaufnehmer,
- einen unterhalb des Lastaufnehmers angeordneten Wägegutträger und
- eine monolithische Biegegelenkanordnung der genannten Art, mittels welcher der Wägegutträger an den Lastaufnehmer angelenkt ist,
   wobei
- entweder der Lastaufnehmer einen Koppelstift aufweist, der in der Fixierungsöffnung des Eingangsstücks der monolithischen Biegegelenkanordnung fixierbar ist, und der Wägegutträger eine Fixierungshülse aufweist, in welcher der Koppelbolzen des Ausgangsstücks der monolithischen Biegegelenkanordnung fixierbar ist,
- oder der Wägegutträger einen Koppelstift aufweist, der in der Fixierungsöffnung des Eingangsstücks der monolithischen Biegegelenkanordnung fixierbar ist, und der Lastaufnehmer eine Fixierungshülse aufweist, in welcher der Koppelbolzen des Ausgangsstücks der monolithischen Biegegelenkanordnung fixierbar ist,
und wobei der Koppelstift formschlüssig in dem gemeinsamen Fixierungskanal axialverschieblich gelagert ist.

Bei einer solchen Waage nämlich ist es möglich, den Koppelstift im Betriebszustand nur so tief in den gemeinsamen Fixierungskanal einzuschieben, dass er die Radialebene der Biegegelenke nicht kreuzt und daher ausschließlich als Kopplung zum Lastaufnehmer bzw. Wägegutträger wirkt. Diese Funktionsstellung soll hier als Betriebsstellung bezeichnet werden. In einer hier als Transportstellung bezeichneten, weiteren Funktionsstellung hingen ist er tiefer in den gemeinsamen Fixierungskanal eingeschoben, sodass er besagte Radialebene kreuzt, als Fixierungsstift wirkt und die Biegegelenke, wie oben beschrieben, blockiert.

Um die beiden Funktionsstellungen des Koppelstiftes exakt zu definierten, ist bevorzugt vorgesehen, dass der Koppelstift zwei axial voneinander beabstandete Ringnuten aufweist. Diese Ringnuten können als Angriffsflächen für die oben beschriebene(n) Klemmschraube(n) im quer zur Fixierungsöffnung bzw. zum gemeinsamen Fixierungskanal ausgerichteten Gewindekanal dienen. Auf diese Weise werden eine präzise Betriebs- und eine ebenso präzise Transportstellung des Koppelstiftes definiert. Die oben erwähnte Axialjustierbarkeit geht dabei zwar verloren. Die oben ebenfalls erwähnte Azimutaljustierbarkeit bleibt jedoch erhalten. Der Verlust der Axialjustierbarkeit ist an dieser Stelle jedoch insbesondere dann leicht verkraftbar, wenn, wie bei der bevorzugten Ausführungsform vorgesehen, der Koppelbolzen auf der anderen Seite der Biegegelenkanordnung mit einer sich über einen nicht unerheblichen Teil seiner Länge erstreckenden seitlichen Klemmabflachung versehen ist. An dieser Klemmabflachung kann nämlich die Fixierungshülse des Wägegutträgers bzw. Lastaufnehmers in unterschiedlichen Axialpositionen mittels einer Klemmschraube (unter Beibehaltung ihrer Azimutalausrichtung) fixiert werden. Insgesamt ist also bei dieser Ausführungsform sowohl eine Axialjustierbarkeit als auch eine Azimutalausrichtbarkeit des Wägegutträgers relativ zum Lastaufnehmer gegeben.

Weitere Einzelheiten und Vorteile der Erfindung ergeben sich aus der nachfolgenden speziellen Beschreibung und den Zeichnungen.

### Kurzbeschreibung der Zeichnungen

Es zeigen:
- Figur 1:: eine perspektivische Darstellung einer bevorzugten Ausführungsform einer erfindungsgemäßen Biegegelenkanordnung,
- Figur 2:: eine erste Seitenansicht der Biegegelenkanordnung von Figur 1,
- Figur 3:: eine um 90° versetzte, zweite Seitenansicht der Biegegelenkanordnung von Figur 1,
- Figur 4:: die Biegelenkanordnung von Figur 1 in Seiten- und Schnittdarstellungen mit eingesetztem Koppelstift in Betriebsstellung sowie
- Figur 5:: die Biegelenkanordnung von Figur 1 in Seiten- und Schnittdarstellungen mit eingesetztem Koppelstift in Transportstellung.

### Beschreibung bevorzugter Ausführungsformen

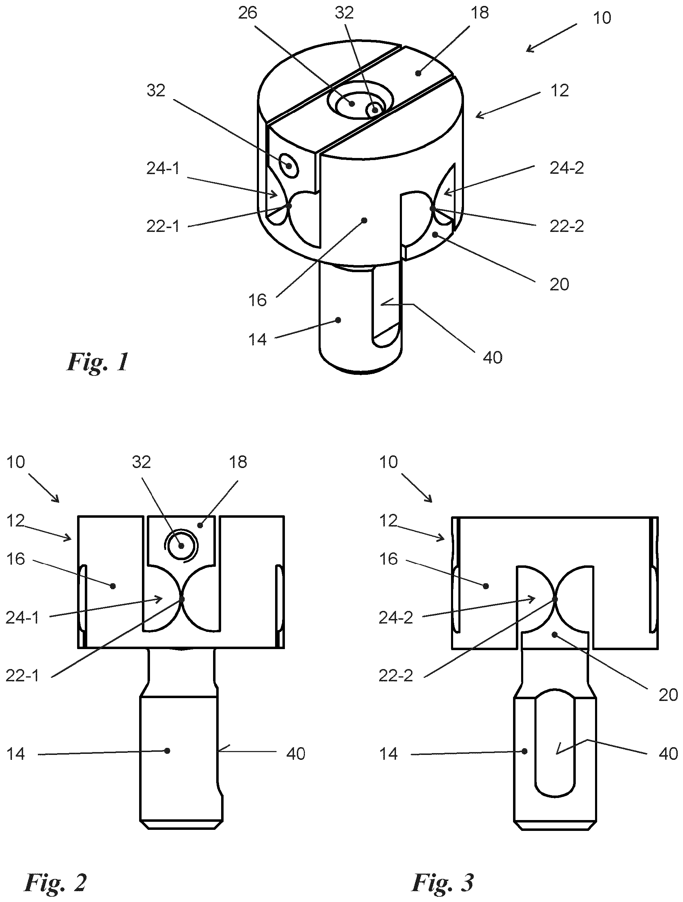

Die Figuren 1 bis 5 zeigen eine besonders bevorzugte Ausführungsform einer erfindungsgemäßen Biegegelenkanordnung 10. Diese weist einen Hauptkörper 12 von im wesentlichen zylindrischer Grundform auf. An den Hauptkörper 12 schließt sich in den Figuren unten ein Koppelbolzen 14 an, auf den weiter unten noch näher eingegangen wird. Die wesentlichen Merkmale der vorliegenden Erfindung sind jedoch im Hauptkörper 12 verwirklicht, der daher zunächst allein beschrieben werden soll.

Der Hauptkörper 12 der erfindungsgemäßen Biegegelenkanordnung 10 umfasst ein Zentralstück 16. Die Grundform des Zentralstücks 16 kann beschrieben werden als ein Zylinder, in dessen beide Stirnseiten jeweils eine das Zentralstück 16 radial durchsetzende Nut eingeschnitten ist, wobei sich die beiden Nuten senkrecht zueinander erstrecken. Die Tiefe der Nuten ist so gewählt, dass sie in ihrem Kreuzungsbereich einander durchsetzen.

In der in den Figuren oben dargestellten Nut des Zentralstücks 16 ist ein balkenartiges Eingangsstück 18 angeordnet. In der in den Figuren unten dargestellten Nut des Zentralstücks 16 ist ein ebenfalls balkenartiges Ausgangsstück 20 angeordnet. Eingangsstück 18 und Ausgangsstück 20 sind jeweils über ein als längserstreckte Materialdünnstelle ausgebildetes Biegegelenk 22 an das Zentralstück 16 angelenkt. Zur Unterscheidung wird das das Eingangsstück 18 an das Zentralstück 16 anlenkende Biegegelenk 22 hier als erstes Biegegelenk 22-1 und das das Ausgangsstück 20 an das Zentralstück 16 anlenkende Biegegelenk 22 als zweites Biegegelenk 22-2 bezeichnet.

Zur Ausbildung besagter Biegegelenke 22 ist der Hauptkörper 12 mit zwei sich senkrecht kreuzenden Kanalpaaren 24 versehen, die jeweils aus zwei einzelnen Durchgangskanälen mit D-förmigem Profil bestehen. Die gekrümmten Seitenwände der einzelnen Durchgangskanäle jedes Kanalpaars 24 sind einander zugewandt und bilden zwischen ihren Scheitelpunkten die die Biegegelenke 22 bildenden Stege aus. Zur leichteren Zuordnung wird hier das dem ersten Biegegelenk 22-1 zugeordnete Kanalpaar als erstes Kanalpaar 24-1 und das dem zweiten Biegegelenk 22-2 zugeordnete Kanalpaar als zweites Kanalpaar 24-2 bezeichnet.

Der Fachmann wird erkennen, dass die obige Beschreibung, wonach Nuten in den Hauptkörper "eingeschnitten" und Ein- und Ausgangsstück darin "angeordnet" werden, lediglich illustrativer Natur ist und keine Beschreibung des tatsächlichen Herstellungsverfahrens darstellt. Tatsächlich wird die erfindungsgemäße Biegegelenkanordnung nämlich bevorzugt aus einem Materialblock, bevorzugt Metall, besonders bevorzugt Aluminium, herausgearbeitet, z.B. durch Fräsen, Bohren und/oder Elektroerodieren.

Durch den beschriebenen Aufbau, der insbesondere aus der Zusammenschau der Figuren 1 bis 3 ersichtlich ist, wird die Grundfunktion der erfindungsgemäßen Biegegelenkanordnung 10 realisiert. Das Eingangsstück 18 und das Ausgangsstück 20 sind relativ zu dem Zentralstück 16 schwenkbar, wobei die präzise definierten Schwenkachsen senkrecht zueinander und in derselben Radialebene in Bezug auf die zylindrische Grundform des Hauptkörpers 12 liegen.

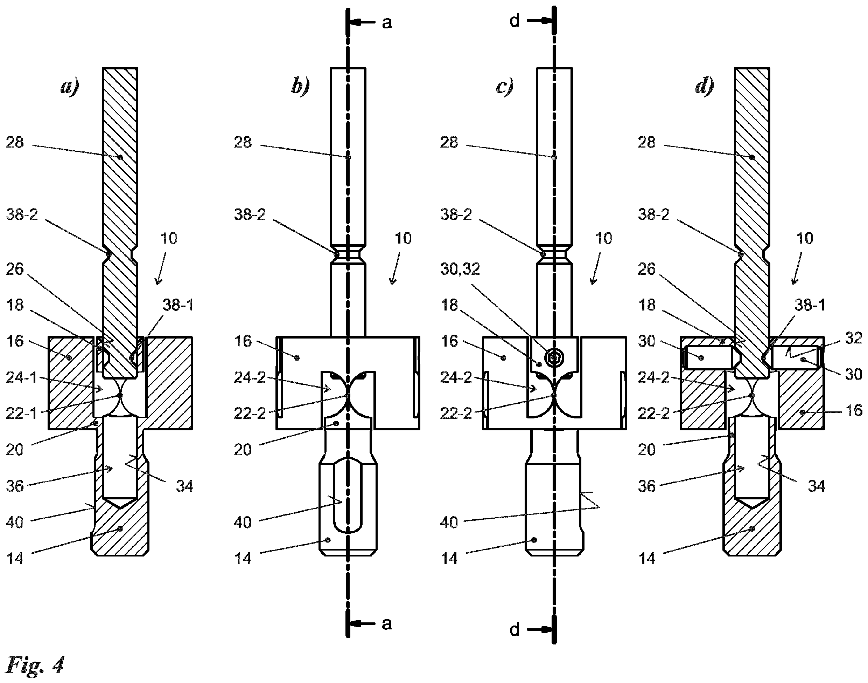

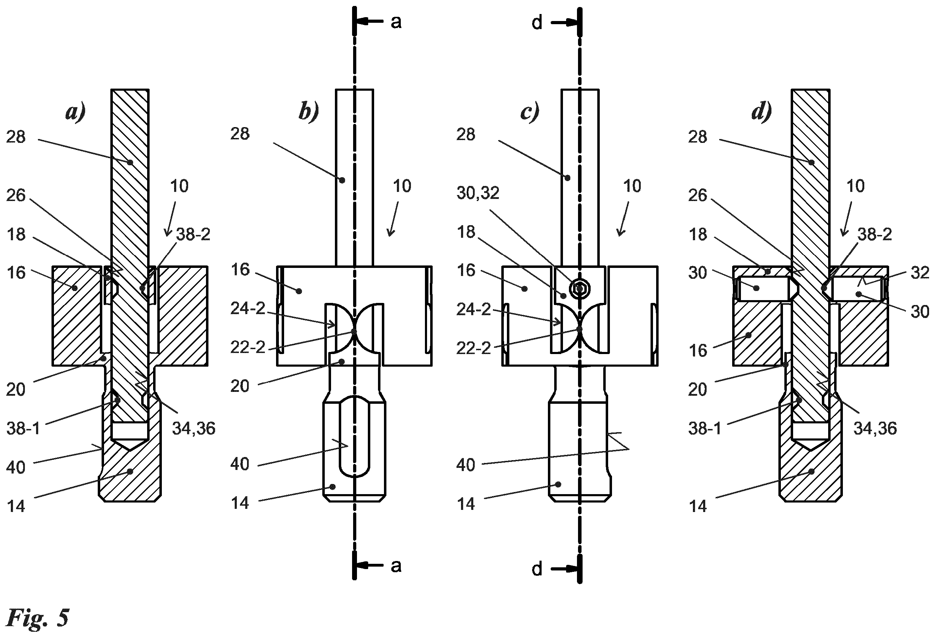

Die erfindungsgemäße Biegegelenkanordnung 10 eignet sich insbesondere zur Kopplung eines in den Figuren nicht dargestellten Wägegutträgers an den ebenfalls nicht dargestellten Lastaufnehmer einer unterschaligen Präzisionswaage. Zur Erleichterung der Ankopplung sieht die dargestellte Ausführungsform vor, dass der Balken des Eingangsstücks 18 an zentraler Stelle mit einer Fixierungsöffnung 26 versehen ist, die koaxial zur Zentralachse des Hauptkörpers 12 verläuft. Wie in den Figuren 4 und 5 dargestellt, kann ein mit dem Lastaufnehmer der Waage verbundener oder verbindbarer Koppelstift 28 formschlüssig in besagte Fixierungsöffnung 26 eingeführt und mittels Klemmschrauben 30, die in einem seitlichen Gewindekanal 32 des Eingangsstücks 18 angeordnet sind, klemmend fixiert werden.

Zur Ankopplung des Wägegutträgers dient bei der dargestellten Ausführungsform der Koppelbolzen 14, der vorzugsweise materialeinheitlich einstückig mit dem Ausgangsstück 20 verbunden ist und sich ebenfalls koaxial zur Zentralachse des Hauptkörpers erstreckt. Zur Ankopplung kann bei dieser Ausführungsform eine nicht dargestellte Koppelhülse des Wägegutträgers formschlüssig über den Koppelbolzen 14 geschoben und mittels einer in einem seitlichen Gewindekanal der Klemmhülse geführten Klemmschraube am Koppelbolzen 14 fixiert werden.

Die Figuren 4 und 5 zeigen eine besonders bevorzugte Ausführungsform der erfindungsgemäßen Biegegelenkanordnung 10 im Zusammenhang mit einer speziellen Ausgestaltung des Koppelstifts 28. Wie insbesondere in den Schnittdarstellungen der Figuren 4a/d und 5a/d zu erkennen, ist nicht nur das Eingangsstück 18 mit einer es vollständig durchsetzenden Führungsöffnung 26 versehen; vielmehr weisen auch das Ausgangsstück 20 und der Koppelbolzen 14 eine Fixierungsöffnung 34 auf, welche das Ausgangsstück 20 vollständig und den Koppelbolzen 14 bei der gezeigten Ausführungsform nur teilweise durchsetzt. Jedenfalls resultiert ein gemeinsamer Fixierungskanal 36, in welchen der Koppelstift 28 formschlüssig axial verschieblich einsatzbar ist.

Der Koppelstift 28 ist bei der gezeigten Ausführungsform mit einer in der Nähe seines freien Endes angeordneten ersten Ringnut 38-1 und mit einer weiter vom freien Ende beabstandeten, zweiten Ringnut 38-2 versehen. In einer in Figur 4 dargestellten, als Betriebsstellung bezeichneten, ersten Funktionsstellung kommt die erste Ringnut 38-1 dergestalt zum Einsatz, dass der Koppelstift 28 nur so tief in den gemeinsamen Fixierungskanal 36 eingetaucht wird, dass Klemmschrauben 30 im seitlichen Gewindekanal 32 des Eingangsstücks 18 in die erste Ringnut 38-1 eingreifen und den Koppelbolzen so (ausschließlich) am Eingangsstück 18 fixieren können. In dieser Betriebsstellung sind beide Biegegelenke 22 aktiv, d.h. das Eingangsstück 18 kann dank des ersten Biegegelenks 22-1 um eine erste Schwenkachse relativ zum Zentralstück 16 schwenken und das Ausgangsstück 20 kann dank des zweiten Biegegelenks 22-2 um eine senkrecht dazu stehende, zweite Schwenkachse relativ zum Zentralstück 18 schwenken. Die Ankopplung des Eingangsstücks 18 an einen nicht dargestellten Lastaufnehmer einer unterschaligen Präzisionswaage kann über den Koppelstift 28 erfolgen.

Aufgrund der Radialsymmetrie der ersten Ringnut 38-1 kann dabei ohne Änderungen der Höheneinstellung eine Azimutaljustierung der Biegegelenkanordnung 10 relativ zum Koppelstift 28 und damit zum Lastaufnehmer erfolgen. Auch eine Höhenjustierung ist bei der dargestellten Ausführungsform ohne weiteres möglich. Wie oben erläutert, wird der Wägegutträger der unterschaligen Präzisionswaage vorzugsweise mittels einer den Koppelbolzen 14 formschlüssig umgreifenden Fixierungshülse angekoppelt. Bei der dargestellten Ausführungsform weist der Koppelbolzen 14 allerdings eine seitliche Klemmabflachung 40 auf. Diese erstreckt sich über einen nicht unerheblichen Längenbereich des Koppelbolzens 14. Eine die zylindrische Grundform des Koppelbolzens 14 formschlüssig umgreifende Fixierungshülse des Wägegutträgers kann in ihrer Höhenlage relativ zum Koppelbolzen 14 verschoben und in der gewünschten Höhe mittels einer sie seitlich durchgreifenden Klemmschraube am Koppelbolzen 14 fixiert werden. Dabei dient die seitliche Klemmabflachung 40 als Widerlager für die Klemmschraube und stellt zugleich eine reproduzierbare azimutale Relativausrichtbarkeit der Fixierungshülse zum Koppelbolzen 14 sicher.

Bei der in Figur 5 dargestellten, als Transportstellung bezeichneten, zweiten Funktionsstellung ist der Koppelstift 28 weiter in den gemeinsamen Fixierungskanal 36 eingeschoben, nämlich insbesondere so weit, dass seine zweite Ringnut 38-2 auf Höhe des seitlichen Gewindekanals 32 des Eingangsstücks 18 liegt und sein freies Ende mindestens bis in die Fixierungsöffnung 34 des Ausgangsstücks 20, bevorzugt, wie dargestellt, bis in den Koppelbolzen 14 hineinragt. In dieser Position kann der Koppelbolzen mittels der Klemmschrauben 30 fixiert werden und wirkt als Fixierungsstift, d.h. er blockiert durch seinen formschlüssigen Eingriff in sämtliche Abschnitte des gemeinsamen Fixierungskanals 36 beide Biegegelenke 22. Das Eingangsstück 18 und das Ausgangsstück 20 sind in dieser Transportstellung also relativ zum Zentralstück 16 fixiert. Selbst erhebliche äußere Krafteinwirkungen können also nicht zu einer die Biegegelenke 22 überlastenden und ggf. beschädigenden Auslenkung führen.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. In seiner bevorzugten Ausführungsform wird die gesamte Biegegelenkanordnung 10 aus einem einheitlichen Metallblock gefräst, gebohrt und/oder elektroelodiert. Alternative Herstellungsmethoden, beispielsweise durch additive Herstellungstechniken (z.B. 3D-Druck) sind jedoch ebenfalls denkbar.

### Bezugszeichenliste

- 10: Biegegelenkanordnung
- 12: Hauptkörper
- 14: Koppelbolzen
- 16: Zentralstück
- 18: Eingangsstück
- 20: Ausgangsstück
- 22-1: erstes Biegegelenk
- 22-2: zweites Biegegelenk
- 24-1: erstes Kanalpaar
- 24-2: zweites Kanalpaar
- 26: Fixierungsöffnung in 18
- 28: Koppelstift
- 30: Klemmschraube
- 32: Gewindekanal
- 34: Fixierungsöffnung in 14/20
- 36: gemeinsamer Fixierungskanal
- 38-1: erste Ringnut
- 38-2: zweite Ringnut
- 40: seitliche Klemmabflachung an 14

## Patentansprüche

1. Monolithische Biegegelenkanordnung (10), umfassend einen Hauptkörper (12), der von zwei Kanalpaaren (24), nämlich einem ersten Kanalpaar (24-1) und einem zweiten Kanalpaar (24-2), durchsetzt ist, welche senkrecht zueinander ausgerichtet in einer Radialebene verlaufen und im Zentrum des Hauptkörpers (12) einander sowie eine normal zur Radialebene stehende Zentralachse schneiden,
wobei jedes Kanalpaar (24) zwei einzelne, parallel zueinander ausgerichtete Durchgangskanäle aufweist, welche mit einander zugewandten, konvex gewölbten Kanalwandabschnitten einander derart eng benachbart angeordnet sind, dass zwischen besagten gewölbten Kanalwandabschnitten verlaufende Stege gemeinsam ein Biegegelenk (22) bilden,
wobei ein Zentralstück (16) des Hauptkörpers (12) mittels eines zwischen den Durchgangskanälen des ersten Kanalpaares (24-1) gebildeten, ersten Biegegelenks (22-1) schwenkbeweglich an ein im Übrigen mit ihm unverbundenes Eingangsstück (18) angelenkt ist und mittels eines zwischen den Durchgangskanälen des zweiten Kanalpaares (24-2) gebildeten, zweiten Biegegelenks (22-2) schwenkbeweglich an ein im Übrigen mit ihm unverbundenes Ausgangsstück (20) angelenkt ist,
**dadurch gekennzeichnet,**
**dass** das Eingangsstück (18) und/oder das Ausgangsstück (20) als ein das Zentralstück (16) radial durchsetzender Balken ausgebildet ist.

2. Monolithische Biegegelenkanordnung (10) nach Anspruch 1,
**dadurch gekennzeichnet,**
**dass** sowohl das Eingangsstück (18) als auch das Ausgangsstück (20) jeweils als ein das Zentralstück (16) radial durchsetzender Balken ausgebildet ist, wobei die Balken windschief und senkrecht zueinander sowie senkrecht zur Zentralachse ausgerichtet sind.

3. Monolithische Biegegelenkanordnung (10) nach einem der vorangehenden Ansprüche,
**dadurch gekennzeichnet,**
**dass** das Eingangsstück (18) auf seiner dem zugeordneten, ersten Biegegelenk (22-1) abgewandten Seite eine zur Zentralachse koaxiale Fixierungsöffnung (26) zur Aufnahme eines Koppelstiftes (28) aufweist.

4. Monolithische Biegegelenkanordnung (10) nach Anspruch 3,
**dadurch gekennzeichnet,**
**dass** das Eingangsstück (18) einen quer zur Fixierungsöffnung (26) verlaufenden Gewindekanal (32) zur Aufnahme einer den Koppelstift (28) in der Fixierungsöffnung (26) klemmenden Klemmschraube (30) aufweist.

5. Monolithische Biegegelenkanordnung (10) nach einem der vorangehenden Ansprüche,
**dadurch gekennzeichnet,**
**dass** das Ausgangsstück (20) auf seiner dem zugeordneten, zweiten Biegegelenk (22-2) abgewandten Seite einen koaxial zur Zentralachse längserstreckten Koppelbolzen (14) aufweist.

6. Monolithische Biegegelenkanordnung (10) nach Anspruch 5,
**dadurch gekennzeichnet,**
**dass** der Koppelbolzen (14) eine zylindrische Grundform mit einer seitlichen Klemmabflachung (40) aufweist.

7. Monolithische Biegegelenkanordnung (10) nach einem der Ansprüche 3 bis 4 sowie einem der Ansprüche 5 bis 6,
**dadurch gekennzeichnet,**
**dass** zur Ausbildung eines gemeinsamen Fixierungskanals (36) die Fixierungsöffnung (26) des Eingangsstücks (18) in eine das Ausgangsstück (20) vollständig und den Koppelbolzen (14) wenigstens über die Länge eines Teilbereichs durchsetzende Fixierungsöffnung (34) des Ausgangsstücks (20) übergeht.

8. Unterschalige Waage, umfassend
- einen über ein Wägesystem mit einem Wägesensor gekoppelten Lastaufnehmer,
- einen unterhalb des Lastaufnehmers angeordneten Wägegutträger und
- eine monolithische Biegegelenkanordnung (10) nach Anspruch 7, mittels welcher der Wägegutträger an den Lastaufnehmer angelenkt ist,
wobei
- entweder der Lastaufnehmer einen Koppelstift (28) aufweist, der in der Fixierungsöffnung (26) des Eingangsstücks (18) der monolithischen Biegegelenkanordnung (10) fixierbar ist, und der Wägegutträger eine Fixierungshülse aufweist, in welcher der Koppelbolzen (14) des Ausgangsstücks (20) der monolithischen Biegegelenkanordnung (10) fixierbar ist,
- oder der Wägegutträger einen Koppelstift (28) aufweist, der in der Fixierungsöffnung (26) des Eingangsstücks (18) der monolithischen Biegegelenkanordnung (10) fixierbar ist, und der Lastaufnehmer eine Fixierungshülse aufweist, in welcher der Koppelbolzen (14) des Ausgangsstücks (20) der monolithischen Biegegelenkanordnung (10) fixierbar ist,
und wobei der Koppelstift (28) formschlüssig in dem gemeinsamen Fixierungskanal (36) axialverschieblich gelagert ist.

9. Waage nach Anspruch 8,
**dadurch gekennzeichnet,**
**dass** der Koppelstift (28) zwei axial voneinander beabstandete Ringnuten (38-1, 38-2) aufweist.

## Claims

1. Monolithic flexure joint arrangement (10), comprising a main body (12) through which two channel pairs (24) pass, namely a first channel pair (24-1) and a second channel pair (24-2), which channel pairs extend in a radial plane in a manner oriented perpendicularly to each other and, in the center of the main body (12), intersect each other and also a central axis oriented normal to the radial plane,
wherein each channel pair (24) comprises two individual through-channels oriented parallel to each other, which are arranged with mutually facing, convexly curved channel wall portions closely adjacent to each other such that webs extending between said curved channel wall portions together form a flexure joint (22),
wherein a central piece (16) of the main body (12) is pivotably articulated to an input piece (18), which is otherwise unconnected thereto, by means of a first flexure joint (22-1) formed between the through-channels of the first channel pair (24-1) and is pivotably articulated to an output piece (20), which is otherwise unconnected thereto, by means of a second flexure joint (22-2) formed between the through-channels of the second channel pair (24-2),
**characterized in that**
the input piece (18) and/or the output piece (20) is configured as a beam passing radially through the central piece (16).

2. Monolithic flexure joint arrangement (10) according to claim 1,
**characterized in that**
both the input piece (18) and the output piece (20) are each configured as a beam passing radially through the central piece (16), the beams being askew and oriented perpendicularly to each other and also perpendicularly to the central axis.

3. Monolithic flexure joint arrangement (10) according to any one of the preceding claims,
**characterized in that**
the input piece (18) has, on the side thereof facing away from the associated first flexure joint (22-1), a fixation opening (26), coaxial to the central axis, for receiving a coupling pin (28).

4. Monolithic flexure joint arrangement (10) according to claim 3,
**characterized in that**
the input piece (18) has a threaded channel (32), extending transversely to the fixation opening (26), for receiving a clamping screw (30) that clamps the coupling pin (28) in the fixation opening (26).

5. Monolithic flexure joint arrangement (10) according to any one of the preceding claims,
**characterized in that**
the output piece (20) has, on the side thereof facing away from the associated second flexure joint (22-2), a coupling bolt (14) extending coaxially to the central axis.

6. Monolithic flexure joint arrangement (10) according to claim 5,
**characterized in that**
the coupling bolt (14) has a cylindrical basic shape with a lateral flattened clamping area (40).

7. Monolithic flexure joint arrangement (10) according to any one of claims 3 to 4 and any one of claims 5 to 6,
**characterized in that**,
in order to form a common fixation channel (36), the fixation opening (26) of the input piece (18) merges into a fixation opening (34) of the output piece (20) that passes through the output piece (20) entirely and through the coupling bolt (14) at least over the length of a sub-region.

8. Bottom-loading balance, comprising
- a load receptor coupled to a weighing sensor via a weighing system,
- a weighed-goods carrier arranged below the load receptor and
- a monolithic flexure joint arrangement (10) according to claim 7, by means of which the weighed-goods carrier is articulated to the load receptor,
wherein
- either the load receptor has a coupling pin (28) which can be fixed in the fixation opening (26) of the input piece (18) of the monolithic flexure joint arrangement (10), and the weighed-goods carrier has a fixation sleeve in which the coupling bolt (14) of the output piece (20) of the monolithic flexure joint arrangement (10) can be fixed,
- or the weighed-goods carrier has a coupling pin (28) which can be fixed in the fixation opening (26) of the input piece (18) of the monolithic flexure joint arrangement (10), and the load receptor has a fixation sleeve in which the coupling bolt (14) of the output piece (20) of the monolithic flexure joint arrangement (10) can be fixed,
and wherein the coupling pin (28) is form-fittingly mounted in the common fixation channel (36) in an axially displaceable manner.

9. Balance according to claim 8,
**characterized in that**
the coupling pin (28) has two axially spaced-apart annular grooves (38-1, 38-2).

## Revendications

1. Ensemble de joint flexible monolithique (10), comprenant un corps principal (12) qui est traversé par deux paires de canaux (24), à savoir une première paire de canaux (24-1) et une deuxième paire de canaux (24-2), lesquelles s'étendent perpendiculairement l'une à l'autre de manière orientée dans un plan radial et se croisent au centre du corps principal (12) et croisent un axe central normal au plan radial,
dans lequel chaque paire de canaux (24) présente deux canaux de passage individuels, orientés parallèlement l'un à l'autre, lesquels sont disposés de manière étroitement adjacente l'un à l'autre avec des sections de paroi de canal en regard les unes des autres, courbées de manière convexe, de telle sorte que des éléments jointifs s'étendant entre lesdites sections de paroi de canal courbées forment conjointement un joint flexible (22),
dans lequel une pièce centrale (16) du corps principal (12) est articulée de manière pivotante au moyen d'un premier joint flexible (22-1) formé entre les canaux de passage de la première paire de canaux (24-1) sur une pièce d'entrée (18) par ailleurs non reliée à celle-ci, et est articulée de manière pivotante au moyen d'un deuxième joint flexible (22-2) formé entre les canaux de passage de la deuxième paire de canaux (24-2) sur une pièce de sortie (20) par ailleurs non reliée à celle-ci,
**caractérisé en ce**
**que** la pièce d'entrée (18) et/ou la pièce de sortie (20) est réalisée sous la forme d'une barre traversant radialement la pièce centrale (16).

2. Ensemble de joint flexible monolithique (10) selon la revendication 1,
**caractérisé en ce**
**qu'**aussi bien la pièce d'entrée (18) que la pièce de sortie (20) est réalisée respectivement sous la forme d'une barre traversant radialement la pièce centrale (16), dans lequel les barres sont orientées de manière inclinée et perpendiculairement l'une à l'autre ainsi que perpendiculairement à l'axe central.

3. Ensemble de joint flexible monolithique (10) selon l'une quelconque des revendications précédentes,
**caractérisé en ce**
**que** la pièce d'entrée (18) présente sur sa face opposée au premier joint flexible (22-1) associé une ouverture de fixation (26) coaxiale par rapport à l'axe central pour la réception d'une tige d'accouplement (28).

4. Ensemble de joint flexible monolithique (10) selon la revendication 3,
**caractérisé en ce**
**que** la pièce d'entrée (18) présente un canal fileté (32) s'étendant transversalement par rapport à l'ouverture de fixation (26) pour la réception d'une vis de serrage (30) serrant la tige d'accouplement (28) dans l'ouverture de fixation (26).

5. Ensemble de joint flexible monolithique (10) selon l'une quelconque des revendications précédentes,
**caractérisé en ce**
**que** la pièce de sortie (20) présente sur sa face opposée au deuxième joint flexible (22-2) associé un boulon d'accouplement (14) étendu longitudinalement coaxialement à l'axe central.

6. Ensemble de joint flexible monolithique (10) selon la revendication 5,
**caractérisé en ce**
**que** le boulon d'accouplement (14) présente une forme de base cylindrique avec un aplatissement de serrage latéral (40).

7. Ensemble de joint flexible monolithique (10) selon l'une des revendications 3 à 4 ainsi qu'une des revendications 5 à 6,
**caractérisé en ce**
**que** pour la réalisation d'un canal de fixation (36) commun l'ouverture de fixation (26) de la pièce d'entrée (18) se prolonge en une ouverture de fixation (34) de la pièce de sortie (20) traversant entièrement la pièce de sortie (20) et le boulon d'accouplement (14) au moins sur la longueur d'une zone partielle.

8. Balance à chargement par le bas, comprenant
- un récepteur de charge couplé à un capteur de pesée par l'intermédiaire d'un système de pesée,
- un support d'article à peser disposé au-dessous du récepteur de charge et
- un ensemble de joint flexible monolithique (10) selon la revendication 7, au moyen duquel le support d'article à peser est articulé sur le récepteur de charge, dans lequel
- soit le récepteur de charge présente une tige d'accouplement (28) qui peut être fixée dans l'ouverture de fixation (26) de la pièce d'entrée (18) de l'ensemble de joint flexible monolithique (10), et le support d'article à peser présente une douille de fixation dans laquelle le boulon d'accouplement (14) de la pièce de sortie (20) peut être fixé à l'ensemble de joint flexible monolithique (10),
- soit le support d'article à peser présente une tige d'accouplement (28) qui peut être fixée dans l'ouverture de fixation (26) de la pièce d'entrée (18) de l'ensemble de joint flexible monolithique (10), et le récepteur de charge présente une douille de fixation dans laquelle le boulon d'accouplement (14) de la pièce de sortie (20) peut être fixé à l'ensemble de joint flexible monolithique (10), et dans laquelle la tige d'accouplement (28) est montée de manière axialement déplaçable par coopération de formes dans le canal de fixation (36) commun.

9. Balance selon la revendication 8,
**caractérisée en ce**
**que** la tige d'accouplement (28) présente deux rainures annulaires (38-1, 38-2) espacées axialement l'une de l'autre.
